(19) Europäisches Patentamt
European Patent Office
Office européen des brevets

(11) **EP 2 103 912 B1**

(12) **EUROPÄISCHE PATENTSCHRIFT**

(45) Veröffentlichungstag und Bekanntmachung des Hinweises auf die Patenterteilung:
**07.09.2016  Patentblatt 2016/36**

(51) Int Cl.:
***G01F 1/66*** (2006.01)

(21) Anmeldenummer: **08102712.0**

(22) Anmeldetag: **18.03.2008**

(54) **Strömungsmessung mit Ultraschall**

Flow measurement with ultrasound

Mesure de l'écoulement à ultrasons

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**23.09.2009  Patentblatt 2009/39**

(73) Patentinhaber: **SICK Engineering GmbH**
**01458 Ottendorf-Okrilla (DE)**

(72) Erfinder:
• **Riedel, Ekkehard**
  **01109, Dresden (DE)**
• **Kochan, Michael**
  **01458, Ottendorf-Okrilla (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**EP-A- 0 580 099      EP-A- 0 622 614**
**WO-A-96/36852      WO-A1-94/20822**
**WO-A1-2006/063873   DE-A1- 2 823 497**
**DE-A1-102004 060 064  US-A- 5 251 490**
**US-B1- 6 647 804**

• "How much do you flare? - GE Measurement & Control", PROCESS worldwide 3-2006, 1 March 2006 (2006-03-01), pages 18-19, XP055213253, Retrieved from the Internet: URL:http://www.ge-mcs.com/download/co2-flo w/PROCWW.pdf [retrieved on 2015-09-14]

EP 2 103 912 B1

**Beschreibung**

Die Erfindung betrifft eine Anordnung und ein Verfahren für die Bestimmung einer Strömungsgeschwindigkeit und/oder eines Durchflusses eines in einer Leitung strömenden Fluids nach dem Oberbegriff von Anspruch 1 beziehungsweise 8.

Für die Messung von Fluidgeschwindigkeiten in Rohrleitungen und Kanälen kann die Ultraschallmesstechnik nach dem Differenzlaufzeitverfahren eingesetzt werden. Dabei werden Ultraschallpulse von einem Paar Ultraschallwandler ausgesandt und empfangen, die einander gegenüber an einer Wandung der Leitung angeordnet sind und aus der Laufzeitdifferenz zwischen einem Messpfad mit der Strömung und dem Messpfad in Gegenrichtung entgegen der Strömung wird die Strömungsgeschwindigkeit bestimmt. In der Ultraschallmesstechnik herrscht häufig der Sprachgebrauch, die beiden Richtungen zusammenfassend als einen Messpfad zu bezeichnen. Da gerade bei hohen Geschwindigkeiten die Bedingungen mit und gegen die Strömungsgeschwindigkeit sich stark voneinander unterscheiden können, wird von diesem Sprachgebrauch gezielt abgewichen.

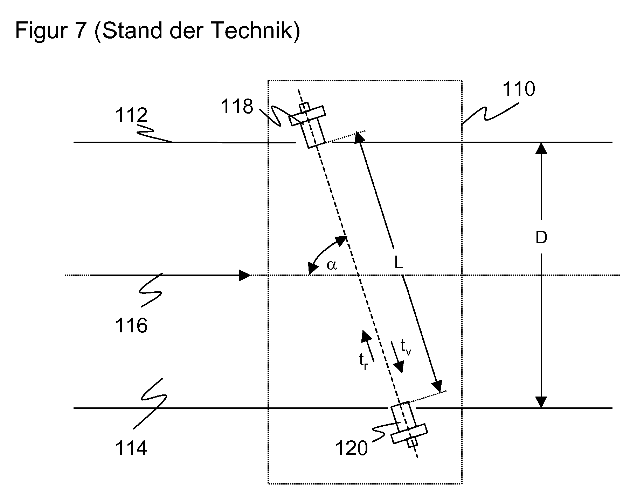

Dieses bekannte Messprinzip ist in Figur 7 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Die Ultraschallwandler 118, 120 arbeiten wechselweise als Sender und Empfänger. Die durch das Gas transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus der Betriebsvolumenstrom. Die geometrischen Verhältnisse sind durch die folgenden Variablen beschrieben:

> $v$: Strömungsgeschwindigkeit des Fluids in der Leitung
> $L$: Länge des Messpfades zwischen den beiden Ultraschallwandlern
> $\alpha$: Winkel, unter dem die Ultraschallwandler senden und empfangen
> $Q$: Volumenstrom
> $D$: Durchmesser der Leitung
> $t_v$: Laufzeit des Ultraschalls mit der Strömung
> $t_r$: Laufzeit des Ultraschalls gegen die Strömung

Daraus ergeben sich für die gesuchten Größen $v$ und $Q$ folgende Beziehungen:

$$v = L/(2\cos\alpha)\,(1/t_v - 1/t_r)$$

und

$$Q = v\,1/4\,D^2\,\pi.$$

Eine besonders anspruchsvolle Anwendung ist die Strömungsmessung von mit sehr hoher Geschwindigkeit in Leitungen bewegten Gasen. Ein Beispiel hierfür sind Flaregasleitungen, welche in petrochemischen Anlagen zu Fackeltürmen führen und in denen Restgase des Produktionsprozesses beziehungsweise im Störfall große Gasmengen mit hoher Geschwindigkeit aus der Anlage gebracht werden. Für derart hohe Strömungsgeschwindigkeiten eines Gases von 70 m/s und mehr ist die herkömmliche Ultraschallmessung nicht ohne Weiteres geeignet und führt zu nur unbefriedigend genauen Messergebnissen. Alternative Messverfahren sind aber im Gegensatz zur Ultraschallmessung abhängig von weiteren Größen wie Druck, Temperatur und Gaszusammensetzung.

Eine im Stand der Technik eingesetzte Maßnahme zur Verbesserung der Messergebnisse mit Ultraschall ist, beide Ultraschallwandler um einen zusätzlichen Vorhaltewinkel von einigen Grad gegen die Strömung anzustellen, so dass also ausgesandter Ultraschall bei idealen geraden Messpfaden das jeweilige Gegenüber verfehlen würde und wegen der Verwehung jeweils mit der Strömung zu dem gegenüberliegenden Ultraschallempfänger getrieben wird. Damit sollen Effekte der hohen Gasgeschwindigkeit ausgeglichen werden. Zudem werden zur Kompensation von Strömungseffekten aufwändige Signalauswertungen vorgenommen. Diese Maßnahme genügt jedoch nicht, zufriedenstellende Messgenauigkeit erreichen, weil die eigentliche Ursache der Störungen nicht erkannt und damit auch nicht kompensiert ist.

Aus der DE 10 2004 060 118 A1 ist eine Vorrichtung zur Bestimmung des Volumenoder Massendurchflusses mit Ultraschallwandlern bekannt. Dabei werden Verformungen in einer Wand der Rohrleitung angebracht, um eine verbesserte Linearität des Messgeräts zu erzielen, also zu erreichen, dass die Strömungsgeschwindigkeit in den Messpfaden zumindest näherungsweise der über eine Querschnittsfläche gemittelten Strömungsgeschwindigkeit entspricht. Indem nach diesem Stand der Technik die Reynoldszahl in einem bestimmten Intervall gehalten wird, kann aber nicht die Signalqualität des Ultraschallsignals selbst verbessert werden, welches durch die herkömmlich völlig unberücksichtigten scharfen Kanten der Ultraschallwandler massiv beeinträchtigt wird. Eine höhere Signalqualität wird weder angestrebt noch erreicht, sondern es wird die Linearität des Messinstruments verbessert. Die erforderlichen Verformungen des Rohrstücks erhöhen außerdem wesentlich den Fertigungsaufwand.

In der DE 10 2004 060 064 A1 ist ein Ultraschall-Durchflussmesser nach dem Prinzip der Laufzeitdifferenz offenbart, bei welchem den Ultraschallwandlern Turbulatoren oder Strömungsrillen vorgeordnet sind, um aerodynamisch verursachte Störsignale zu reduzieren.

Aus der US 6,647,804 B1 ist ein Durchflussmesser nach dem Dopplerprinzip bekannt, dem eine akustische Linse zugeordnet ist, deren Form bündig mit der Leitung liegt, um Turbulenzen zu minimieren.

In der US 5,251,490 wird ein weiterer Durchflussmesser nach dem Dopplerprinzip offenbart, bei dem der Schall über einen Teflonblock in die Leitung geführt wird. Dieser Teflonblock ist auf eine optimale Schallleitung bei minimaler Störung des Fluidstroms optimiert, etwa indem er die Form der oberen Kurve einer Flugzeugtragfläche annimmt.

Die EP 0 622 614 A1 zeigt einen Ultraschall-Durchflussmesser, der durch eine Umlenkung eine stets laminare Strömung sicherstellt.

In einem bekannten Ultraschall-Gaszähler gemäß EP 0 580 099 A2 wird die aus Führungskanälen austretende Strömung durch eine strömungsgünstig gestaltete Umlenkung in ein Messrohr geleitet.

Die WO 96/36852 offenbart einen Ultraschall-Durchflussmesser mit einem Umlenkelement, um die Strömung auf eine Messstrecke umzulenken. Dieses Umlenkelement ist in einer Ausführungsform gerundet ausgebildet.

Aus der DE 28 23 497 ist ein Verfahren zur Messung der Strömungsgeschwindigkeit von Gasen bekannt, bei dem die Laufzeitdifferenz von Ultraschallimpulsen in und entgegen der Strömungsgeschwindigkeit ausgewertet wird. In einer Ausführungsform weisen die Ultraschallerzeuger eine nach dem Innenraum des Messrohres gerichtete Wölbung auf, wobei der freie Raum unter der Wölbung mit einer elastischen Gussmasse ausgefüllt ist.

Aus dem Artikel "How much do you flare? - GE Measurement & Control", PROCESS worldwide 3-2006, !. März 2006 (2006-03-01), Seiten 18-18, XP055213253 ist bekannt, Ultraschalldurchflussmessungen an Flaregas mit hohen Strömungsgeschwindigkeiten durchzuführen. Es werden dann zwar Maßnahmen genannt, die Ultraschallwandler ausreichend stabil auszuführen, nicht jedoch solche Maßnahmen, wie mit den besonderen messtechnischen Anforderungen umzugehen ist,

Es ist daher Aufgabe der Erfindung, die Bestimmung einer Strömungsgeschwindigkeit eines Fluids mit erhöhter Messgenauigkeit zu erreichen.

Diese Aufgabe wird durch eine Anordnung gemäß Anspruch 1 und ein Messverfahren gemäß Anspruch 8 gelöst.

Die erfindungsgemäße Lösung geht von der Erkenntnis aus, dass der wesentliche Grund für schlechte Messwerte bei hohen Strömungsgeschwindigkeiten Abrisswirbel an den in den Innenraum der Leitung hineinragenden Kanten der Ultraschallwandler sind, welche eine erhebliche Lärmbelastung verursachen, welche Ultraschallsignale stören kann. Dadurch entsteht eine starke Signalverzerrung und damit Verschlechterung des Signal/Rauschverhältnisses, wenn ein Signalpaket durch einen solchen Abrisswirbel zu dem gegenüberliegenden Ultraschallwandler gesandt wird. Zusätzlich wird das abgestrahlte Signal auch noch durch die Strömung verweht. Daher ist die Grundidee der Erfindung, Abrisswirbel zu unterdrücken.

Die Erfindung hat den Vorteil, die Beeinflussung des Abstrahlverhaltens und besonders eine Vergrößerung des Abstrahlwinkels der Schallkeule durch Abrisswirbel zu reduzieren, welche auch durch den einleitend beschriebenen Vorhaltewinkel nicht in hinreichendem Maße kompensiert werden könnten. Indem Abrisswirbel unterdrückt werden, erhöht sich die Signalqualität, weil die Wellenfront des Signals erhalten bleibt. Die Wellenfront trifft erfindungsgemäß trotz der hohen Strömungsgeschwindigkeit unter annähernd 90° auf die Membran des empfangenden Ultraschallwandlers, womit der Krafteintrag und die Signalamplitude hoch bleiben.

Damit kann eine besonders bei hohen Strömungsgeschwindigkeiten verbesserte Messgenauigkeit erreicht werden, die nicht oder zumindest deutlich weniger von strömungstechnischen Störeffekten beeinträchtigt ist. Die Vorteile der Ultraschallmessung gegenüber anderen Verfahren, nämlich Unabhängigkeit von Druck, Temperatur und Gaszusammensetzung und weiterhin hohe Präzision, Wartungsfreiheit, Möglichkeiten der Selbstdiagnose und Vermeidung eines Druckabfalls durch die Messung können somit auch bei den genannten Anwendungen mit sehr hohen Strömungsgeschwindigkeiten ausgenutzt werden. Vergleichende Messungen zeigen, dass der Lärmpegel (Störpegel am Ultraschallwandler) sich auf die Hälfte und der Verwehungswinkel der Schallkeule um ca. 1/3 verringert.

Die Flaregasleitung weist vorzugsweise einen zylindrischem oder rechteckigem Querschnitt auf. Natürlich sind Rohrleitungen mit anderem Querschnitt von der Erfindung umfasst, sofern darin hohe Strömungsgeschwindigkeiten ohne allzu große Turbulenzen erreicht werden können.

Bevorzugt sind zusätzliche Ultraschallwandler vorgesehen, welche dafür ausgebildet sind, die Strömungsgeschwindigkeit und/oder den Durchfluss auf mindestens einem weiteren Messpfad zu bestimmen. Diese zusätzlichen Ultraschallwandler weisen dabei vorzugsweise ebenfalls die erfindungsgemäße strömungsoptimierte Kontur auf. Durch zusätzliche Messpfade kann bei gestörten Strömungen ein besseres Maß für den Volumenstrom gefunden werden, welches nicht oder weniger durch lokale Geschwindigkeitsunterschiede der Strömung verfälscht ist. Dabei sind zwei Fälle zu unterscheiden: Entweder wird ein zusätzlicher Empfänger etwas weiter stromabwärts eingesetzt, welcher einen stärker verwehten Anteil des Messsignals aufnimmt und damit eigentlich noch dem ursprünglichen Paar von Messpfaden zugehört, oder es werden ein oder mehrere zusätzliche Paare von Ultraschallwandlern eingesetzt, die ein klassisches Mehrpfadmesssystem bilden. Die beiden Fälle lassen sich auch vereinen, so dass dann in einem klassischen Mehrpfadsystem jeweils mehrere Empfänger den verwehten Anteil zusätzlich aufnehmen.

Die Ultraschallwandler sind an einer Wandung der Leitung angeordnet in jeweils einem senkrecht zu der Leitung angeordneten Stutzen montiert oder angeschweißt und ragen zumindest mit einem Teilbereich in den von dem Fluid durchströmten Innenraum hinein, wobei insbesondere ein den jeweiligen Ultraschallwandler umgebender Leitungsteilbereich der Wandung gemeinsam mit dem in den Innenraum ragenden Teilbereich des Ultraschallwandlers eine strömungsoptimierte Kontur bildet. Zwar wäre grundsätzlich die Verwirbelung an den Ultraschallwandlern geringer, wenn sie in einen Stutzen der Wandung zurückgezogen würden. Dabei entstehen aber problematische Wandreflexionen und eine Veränderung der Abstrahlcharakteristik. Durch die erfindungsgemäße strömungsoptimierte Kontur ist es möglich, auf dieses Zurückziehen zu verzichten, ohne damit hohe Lärmstörungen an den Ultraschallwandlern zu verursachen und durch Hineinragen der Ultraschallwandler ein reflexionsfreies und in seiner Abstrahlcharakteristik erhaltenes Ultraschallsignal zu verwenden. Wenn die Bereiche der Wandung, welche die Ultraschallwandler umgeben, Teil der strömungsoptimierten Kontur sind, so können Abrisswirbel in einem noch stärker verbesserten Maße vermieden werden, weil der Strömung großflächigere und damit glattere Konturen angeboten werden können.

Bevorzugt sind die Ultraschallwandler in einem Gehäuse untergebracht, welches die strömungsoptimierte Kontur aufweist, wobei das Gehäuse an zumindest einer Seite eine glatte, konvexe Außenkontur hat. Dieses Gehäuse kann auch größer sein als die eigentlichen Ultraschallwandler und ihre Membrane und es schafft so Freiheitsgrade der Translation und der Verkippung der Ultraschallwandler gegenüber ihrem Gehäuse, wie es die optimalen Messpfade fordern, ohne dabei die der Strömung angebotene Kontur zu verändern, welche durch das Gehäuse vorgegeben ist.

Besonders bevorzugt ist das Gehäuse senkrecht in die Leitung eingesetzt und jeder Ultraschallwandler ist mit seiner Abstrahlfläche um einen Winkel verkippt, so dass der erste und der zweite Messpfad gegenüber einer Querschnittsebene der Leitung schräg verlaufen. Die Messpfade verlaufen damit schräg sowohl zur Strömungsrichtung wie zu einer Senkrechten zur Strömungsrichtung. Das senkrechte Einsetzen erleichtert die Montage und die Ausrichtung, denn ein schräges, stabiles Anschweißen der Stutzen vor Ort, um eine exakte Ausrichtung zu erzielen, erfordert einen erhöhten technischen Aufwand, ist kompliziert und fehlerbehaftet. Die Verkippung der Ultraschallwandler gegenüber dem Gehäuse ermöglicht die einfachere senkrechte Montage und gleichzeitig die freie, durch Messanforderungen vorgegebene Ausrichtung der Ultraschallwandler.

Der Verkippungswinkel kann dabei so gewählt sein, dass die Ultraschallwandler zueinander ausgerichtet sind, es kann aber auch ein zusätzlicher Vorhaltewinkel in Gegenrichtung der Strömung vorgesehen sein. Ohne Veränderung der strömungsoptimierten Außenkontur können die Ultraschallwandler so ausgerichtet werden, dass ihre Abstrahlrichtung namentlich gegenüber Verwehungen zu möglichst genauen Messergebnissen führt.

In vorteilhafter Weiterbildung sind der erste und der zweite Ultraschallwandler zueinander parallelverschoben angeordnet, so dass der erste Messpfad und der zweite Messpfad zueinander um einen Versatz in Strömungsrichtung beabstandet verlaufen. Dabei haben also die Schallachsen der einander gegenüberstehenden Ultraschallwandler zueinander den Versatz. Es hat sich nämlich gezeigt, dass die Qualität des Signals auf dem Messpfad gegen die Strömungsrichtung in besonders hohem Maße unter Abrisswirbel und Verwehungen leidet. Durch den Versatz trifft der Ultraschall auf diesem Messpfad den gegenüberliegenden Ultraschallwandler in verbesserter Weise. Zwar wird das Messergebnis auf dem Messpfad mit der Strömungsrichtung zugleich etwas beeinträchtigt, da dieser Messpfad zwangsläufig etwas schlechter auf den zugehörigen Ultraschallempfänger ausgerichtet ist. Da die Gesamtmessung als Laufzeitdifferenz von beiden Messpfaden abhängt, wird dieser geringe Verlust durch den Gewinn auf dem Messpfad gegen die Strömungsrichtung überkompensiert. Der Signal/Rauschabstand beispielsweise bei 80 m/s kann durch den Versatz um mindestens weitere 2 dB verbessert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      einen Längsschnitt durch eine Rohrleitung mit einer ersten Ausführungsform einer erfindungsgemäßen Messvorrichtung;

Fig. 2      ein schematisches Blockschaltbild der erfindungsgemäßen Messvorrichtung;

Fig. 3      einen Längsschnitt gemäß Figur 1 zur Erläuterung der Entstehung und Auswirkung von Abrisswirbeln und Verwehungen;

Fig. 4      einen Funktionsplot der theoretisch zu erwartenden Verwehungswinkel in Abhängigkeit von der Strömungsgeschwindigkeit;

Fig. 5      einen Längsschnitt gemäß Figur 1 einer zweiten Ausführungsform einer erfindungsgemäßen Messvorrichtung mit einem Parallelversatz der Ultraschallwandler;

Fig. 6      einen Längsschnitt gemäß Figur 1 einer dritten Ausführungsform einer erfindungsgemäßen Messvorrichtung mit zusätzlichen strömungsoptimierten Konturen der Rohrleitung; und

Fig. 7 einen Längsschnitt durch eine Rohrleitung mit einer Messvorrichtung nach dem Stand der Technik zur Erläuterung eines Ultraschallmessverfahrens mittels einer Laufzeitdifferenz.

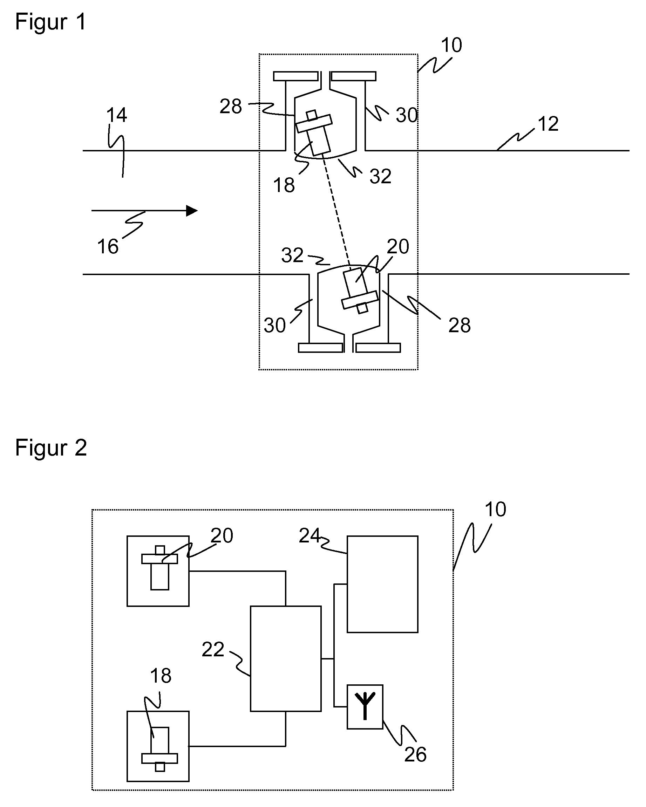

Figur 1 zeigt im Längsschnitt eine erste Ausführungsform einer erfindungsgemäßen Messvorrichtung 10, welche an einer Rohrleitung 12 montiert ist, in der ein Fluid 14 in der durch den Pfeil 16 bezeichneten Richtung strömt. Die Rohrleitung 12 ist zylindrisch, könnte aber auch einen anderen Querschnitt aufweisen. Ein Paar Ultraschallwandler 18, 20 ist so zueinander ausgerichtet, dass von dem einen Ultraschallwandler 18 ausgesandter Ultraschall von dem anderen Ultraschallwandler 20 empfangen werden kann und umgekehrt. Figur 2 zeigt die Messvorrichtung 10 in einem schematischen Blockschaltbild, wobei hier wie im Folgenden gleiche Bezugszeichen die gleichen Merkmale bezeichnen.

Eine Steuerung 22, beispielsweise ein Mikroprozessor oder eine andere Logik, wie ein FPGA, ein DSP, ein ASIC, steuert das Aussenden von Ultraschallsignalen durch die Ultraschallwandler 18, 20, beispielsweise als Pulsserie bei einer Ultraschallfrequenz von 80 kHz und größer und wertet die Laufzeiten der am gegenüberliegenden Ultraschallwandler 20, 18 empfangenen Signale aus. Daraus kann die Steuerung 22 mit dem einleitend im Zusammenhang mit der Figur 7 beschriebenen oder einem anderen Verfahren die Strömungsgeschwindigkeit und den Volumenstrom berechnen. Die Messergebnisse können dann weiterverarbeitet werden, indem sie gespeichert, über eine Anzeige 24 dargestellt oder mittels einer Schnittstelle 26 drahtgebunden oder auch drahtlos, etwa seriell, per Ethernet, WLAN, Bluetooth, Mobilfunk oder einem anderen Standard ausgegeben werden. Umgekehrt kann ein Computer, ein Notebook, ein PDA oder dergleichen angeschlossen werden, um die Steuerung 22 zu konfigurieren, Firmware aufzuspielen oder dergleichen.

Jeder Ultraschallwandler 18, 20 ist in einem Gehäuse 28 angeordnet, welches jeweils in einem senkrecht zur Rohrleitung orientierten Stutzen 30 durch senkrechte Flanschmontage befestigt wird. Im Bereich der Membranen der Ultraschallwandler 18, 20 zur Abstrahlung und zum Empfang von Ultraschall ist das Gehäuse 28 für Ultraschall durchlässig, weist eine Öffnung auf, oder die Membranen sind am Ort der Abstrahlung und des Empfangs in das Gehäuse 28 integriert. Die Ultraschallwandler 18, 20 sind gegenüber ihrem Gehäuse 28 um einen Winkel von beispielsweise 15° verkippt, damit der Messpfad in der einen Richtung mit der Strömung und in der anderen Richtung gegen die Strömung verläuft. Dieser Winkel kann, anders als in Figur 1 dargestellt, absichtlich gegen die Strömungsrichtung angestellt werden, so dass erst der durch die Strömung verwehte Ultraschall jeweils auf den gegenüberliegenden Ultraschallwandler 18, 20 gerichtet ist.

Jedes Gehäuse 28 ragt aus dem zugehörigen Stutzen 30 ein Stück in den Innenraum der Rohrleitung 12 und damit in die Strömung des Fluids 14 hinein. Dabei ist diejenige Außenkontur 32 des Gehäuses 28, die in die Strömung hineinragt, strömungsoptimiert ausgebildet, um die Ausbildung von Abrisswirbeln in der Strömung an dem Gehäuse 28 zu unterdrücken. Die Außenkontur 32 ist daher bevorzugt glatt und konvex, bietet der Strömung also keine Kanten, Ecken sowie nach innen oder außen gerichtete Ausbuchtungen, in denen Turbulenzen und Wirbel entstehen oder verstärkt werden könnten. Die Form der Außenkontur 32 kann in Abhängigkeit der geplanten Anwendung, also besonders der Art des zu messenden Fluids und der zu erwartenden Strömungsgeschwindigkeiten, experimentell oder theoretisch bestimmt werden und sich dabei an aerodynamischen Formen orientieren, wie sie etwa aus der Luftfahrttechnik bekannt sind. Auch die in Figur 1 beispielhaft dargestellte dargebotene Außenkontur 32 ähnelt dem Profil einer Tragfläche.

In einer alternativen Ausführungsform kann anstelle des Gehäuses 28 der Ultraschallwandler 18, 20 selbst eine strömungsoptimierte Außenkontur aufweisen. Dieser Ultraschallwandler ist dann schräg zu montieren und seine Außenkontur wird sich für gewöhnlich nur für bestimmte Verkippungswinkel optimieren lassen. Die Ausführungsform mit einem Gehäuse 28 ist also insofern flexibler, als der Verkippungswinkel und in gewissem Rahmen auch eine Translation des Ultraschallwandlers 18, 20 relativ zu dem Gehäuse 28 unabhängig gewählt werden können.

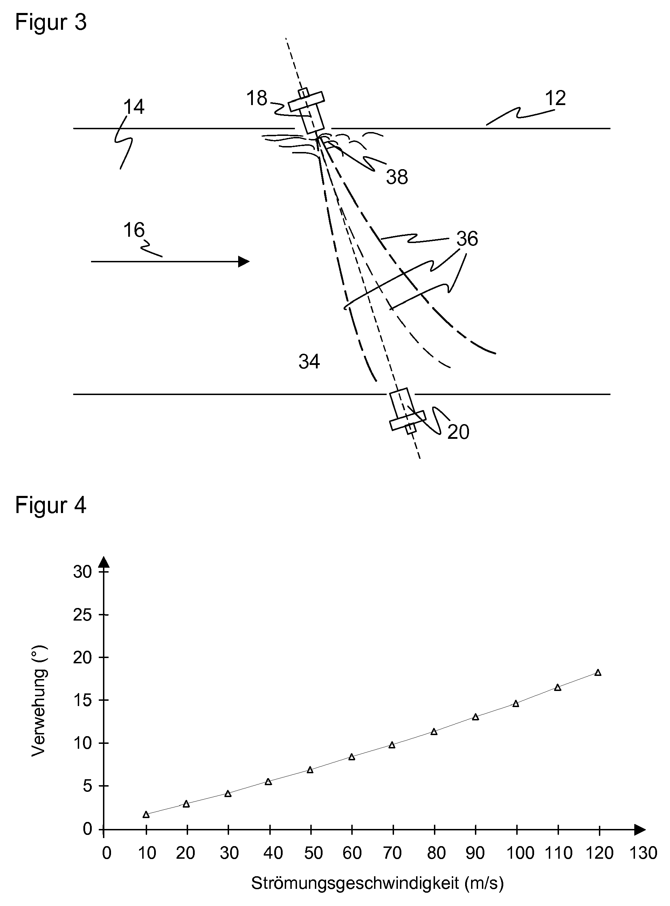

Die Gründe, warum eine strömungsoptimierte Kontur 32 die Messergebnisse drastisch verbessert, werden nun anhand der Figuren 3 und 4 näher erläutert. Aus einer Analyse von Wellenausbreitungen in Gasen lässt sich nämlich erkennen, wie Wellenfronten bei auftretenden Querströmungen gestört werden [vergleiche hierzu etwa L. Cervino et al., "Perturbation and adjoint analyses of flow-acoustic interactions in an unsteady 2D jet", Proceedings of the 2002 Summer Program, Center for Turbulence Research, insbesondere Figur 8]. Entsprechend stören die Abrisswirbel 38 die Wellenfronten des Ultraschallsignals der Ultraschallwandler 18, 20 und damit die Messgenauigkeit.

Figur 3 zeigt einen weiteren Längsschnitt einer Rohrleitung 12 mit einem darin strömenden Fluid 14 sowie ein Paar Ultraschallwandler 18, 20. Das Ultraschallsignal wird gegenüber einer idealen Ausbreitungsrichtung auf einem Messpfad 34 in Abhängigkeit von der Strömungsgeschwindigkeit verweht, wie dies durch die gestrichelten Linien 36 angedeutet ist. Dabei ändert sich nicht allein die Ausbreitungsrichtung des Ultraschalls, sondern auch die Form der Schallkeule.

An den scharfen Kanten der hier nicht mit der erfindungsgemäßen strömungsoptimierten Kontur 32 versehenen Ultraschallwandler 18, 20 bilden sich Abrisswirbel 38, die auch ein weitaus größeres Ausmaß annehmen können als dargestellt. Diese führen zu einer starken Signalverzerrung, nämlich einem störenden Lärmpegel an den Ultraschallwandlern 18, 20, der die Qualität der Geschwindigkeitsmessung erheblich beeinträchtigt und ab einer gewissen Geschwindigkeit des Fluids 14 eine Messung per Ultraschall für die Praxis untauglich macht. Die erfindungsgemäße strömungsoptimierte Außenkontur 32 ermöglicht also erst die Anwendung einer Ultraschallmessung bei Strömungsgeschwindigkeiten auch oberhalb einer Grenze von etwa 70 m/s wie beispielsweise in einer Flaregasleitung.

Die Abrissturbulenzen oder Abrisswirbel 38 verstärken aber zusätzlich zu dem störenden Lärmpegel auch den Verwehungseffekt. In Figur 4 ist mit dreieckigen Datenpunkten und einer durchgezogenen Linie die mit einem Vektoransatz berechnete theoretische Abhängigkeit des Verwehungswinkels von der Strömungsgeschwindigkeit aufgetragen. Experimentelle Untersuchungen zeigen, dass die maximale Amplitude des gesendeten Ultraschallsignals deutlich stärker verweht wird, als dies die theoretische Herleitung vorhersagt. Die Kurve der tatsächlichen Verwehungswinkel läge demnach in Figur 4 deutlich oberhalb der dargestellten theoretischen Vorhersage und eine Unterdrückung von Abrisswirbeln 38 vermag deshalb als zweiten Verbesserungseffekt zu einer Reduktion des Lärmpegels auch die negativen Auswirkungen der Verwehung zu begrenzen.

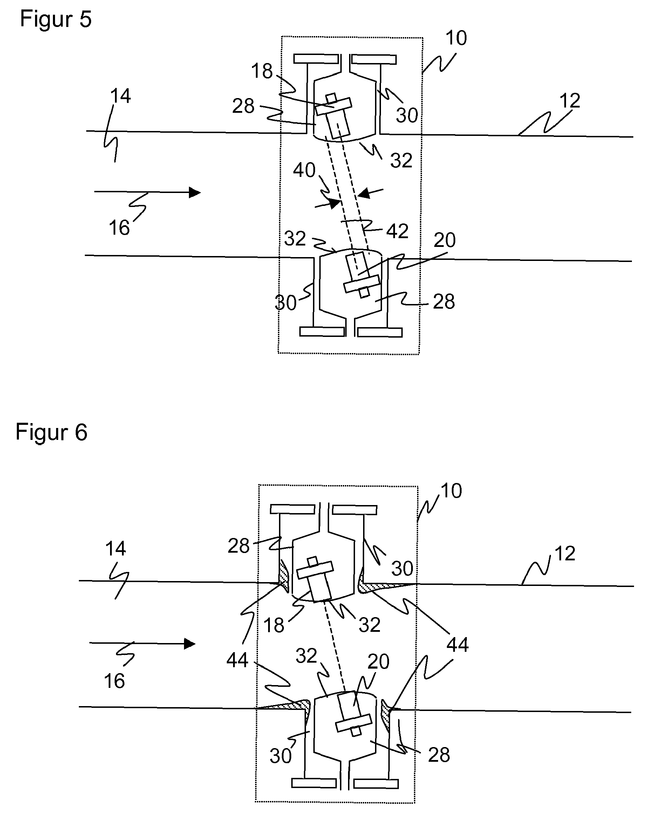

In Figur 5 ist eine weitere Ausführungsform der erfindungsgemäßen Messvorrichtung 10 dargestellt. Sie unterscheidet sich von der Messvorrichtung gemäß Figur 1 darin, dass die Ultraschallwandler 18, 20 zueinander einen Parallelversatz 40 aufweisen. Würde sich also der Ultraschall in einer einfachen geraden Linie 42 ausbreiten, so verfehlte die Hauptausbreitungsrichtung jeweils den gegenüberliegenden Ultraschallwandler 18, 20.

Wie Figur 3 illustriert, wird aber die Schallkeule 36 verweht. Aufgrund des Parallelversatzes 40 trifft die von dem Ultraschallwandler 20 ausgesandte Schallkeule auf dem Messpfad gegen die Strömungsrichtung aufgrund der Verwehung den Ultraschallwandler 18 besser, als wenn kein Parallelversatz 40 vorgesehen ist. Umgekehrt wird auf dem Messpfad mit der Strömungsrichtung der nachteilige Effekt durch die Verwehung nur wenig verstärkt. Grund ist die unterschiedliche zeitliche Einwirkung der Strömung auf die beiden gegenläufigen Ultraschallsignale. Mit anderen Worten wird der nachteilige Effekt auf dem Messpfad mit der Strömungsrichtung durch den positiven Effekt auf dem Messpfad gegen die Strömungsrichtung überkompensiert. Bevorzugt wird der Parallelversatz 40 so groß gewählt, dass auf beiden Messpfaden das Signal/Rauschverhältnis gleich gut ist und damit das Gesamtsystem sein Optimum erreicht.

Figur 6 zeigt eine weitere Ausführungsform der erfindungsgemäßen Messvorrichtung 10, die sich von der Messvorrichtung gemäß Figur 1 darin unterscheidet, dass zusätzlich zu einer strömungsoptimierten Außenkontur 32 der Ultraschallwandler 18, 20 oder von deren Gehäuse 28 auch die Wandung der Rohrleitung 12 strömungsoptimiert wird. Dabei werden Verformungen 44 an der Innenwandung der Rohrleitung 12 angebracht, welche bevorzugt die strömungsoptimierte Außenkontur 32 fortsetzen. Das Fluid 14 wird also bereits beim Anströmen auf die Ultraschallwandler 18, 20 so gelenkt, dass an dem Gehäuse 28 die Abrisswirbel 38 noch stärker unterdrückt werden als durch die Außenkontur 32 allein. Nochmals in anderen Worten ausgedrückt ermöglichen die Verformungen 44, eine strömungsoptimierte Kontur noch besser anzupassen und insbesondere über eine größere Fläche vorzusehen als das Gehäuse 28 beziehungsweise den Querschnitt des Stutzens 30. Dadurch entstehen weitere Freiheitsgrade, um die Auftreffflächen des an- und abströmenden Fluids 14 für eine zusätzliche Verbesserung der Messgenauigkeit noch besser auf die Strömung zu optimieren.

Zur weiteren Strömungsoptimierung kann ein Gleichrichter in dem Innenraum der Rohrleitung 12 vorgesehen sein, welcher die Strömung des Fluids 12 für den Bereich der Messvorrichtung 10 linearisiert oder zumindest Turbulenzen verringert und der dafür in oder vor diesem Bereich angeordnet ist. Die Außenkontur 32, die Verformungen 44 und/oder der Gleichrichter können dabei auf ein Zusammenwirken zur möglichst weitgehenden Unterdrückung von Abrisswirbeln 38 optimiert werden.

Es ist weiterhin denkbar, zusätzlich zu den Ultraschallwandlern 18, 20 weitere einzelne oder Paare von Ultraschallwandlern einzusetzen, um weitere Messpfade zu erhalten. Eine besondere Position für einen solchen zusätzlichen Ultraschallwandler ist stromabwärts in einem Bereich, in dem stärker verwehte Signalanteile empfangen werden, um somit durch den Empfang desselben Signals an unterschiedlichen Orten eine bessere Gesamtinformation zu erhalten. Alternativ oder zusätzlich können weitere Paare von Ultraschallwandlern eingesetzt werden, um nach Art eines klassischen Mehrpfadsystems einen örtlich anderen Anteil der Strömungsgeschwindigkeit zu messen. Jeder Messpfad gibt dabei Auskunft über die Strömungsgeschwindigkeit in seiner lokalen Umgebung. Ist die Strömung gestört, so muss dies nicht notwendig der mittleren Strömungsgeschwindigkeit entsprechen und es kann auch eine ungenaue Bestimmung des Volumendurchsatzes resultieren. Weitere Messpfade über den Querschnitt der Rohrleitung 12 verbreitern die Basis an Information über das Strömungsprofil und ermöglichen somit eine genauere Messung.

Die zu einer einzelnen Ausführungsform beschriebenen Merkmale lassen sich jeweils mit den anderen Ausführungsformen kombinieren. So ist beispielsweise möglich, Verformungen der Rohrleitung 12 zusätzlich zu einem Parallelversatz 40 der Ultraschallwandler 18, 20 vorzunehmen.

**Patentansprüche**

1. Anordnung umfassend eine Flaregasleitung (12) zum Führen eines darin mit hohen Strömungsgeschwindigkeiten von zumindest 40 m/s oder sogar von zumindest 70 m/s strömenden Fluids (14) und eine an der Flaregasleitung (12) montierte Messvorrichtung (10) für die Bestimmung einer Strömungsgeschwindigkeit und/oder eines Durchflusses des Fluids, wobei die Messvorrichtung mindestens einen ersten Ultraschallwandler (18) und einen zweiten Ultraschallwandler (20) aufweist, die an einer Wandung der Flaregasleitung (12) angeordnet und in jeweils einem senkrecht zu der Leitung (12) angeordneten Stutzen (30) montiert oder angeschweißt sind und mit einem Teilbereich in den von dem Fluid (14) durchströmten Innenraum hineinragen und weiterhin derart zueinander angeordnet sind, dass im Betrieb der auf einem ersten Messpfad vom ersten Ultraschallwandler (18) zum zweiten Ultraschallwandler (20) ausgesandte und empfangene Ultraschall gegenüber einem auf einem zweiten Messpfad in umgekehrter Richtung von dem zweiten Ultraschallwandler (20) gesendeten und von dem ersten Ultraschallwandler (18) empfangenen Ultraschall eine von der Strömungsgeschwindigkeit abhängige Laufzeitdifferenz aufweist, wobei der erste Ultraschallwandler (18) und der zweite Ultraschallwandler (20) eine für die Art des Fluids und die zu erwartende Strömungsgeschwindigkeit anhand von aus der Luftfahrttechnik bekannten aerodynamischen Formen strömungsoptimierte Kontur (32) aufweisen, bei der eine in die Strömung hineinragende Außenkontur dem Profil einer Tragfläche ähnelt und so die Ausbildung von Abrisswirbeln (38) an dem Ultraschallwandler (18, 20) unterdrückt.

2. Anordnung nach Anspruch 1,
wobei die Flaregasleitung (12) einen zylindrischen oder rechteckigen Querschnitt aufweist.

3. Anordnung nach Anspruch 1 oder 2,
wobei zusätzliche Ultraschallwandler vorgesehen sind, welche dafür ausgebildet sind, die Strömungsgeschwindigkeit und/oder den Durchfluss auf mindestens einem weiteren Messpfad zu bestimmen.

4. Anordnung nach einem der vorhergehenden Ansprüche,
wobei ein den jeweiligen Ultraschallwandler (18, 20) umgebender Leitungsteilbereich (44) der Wandung gemeinsam mit dem in den Innenraum ragenden Teilbereich (32) des Ultraschallwandlers (18, 20) eine strömungsoptimierte Kontur bildet.

5. Anordnung nach einem der vorhergehenden Ansprüche,
wobei die Ultraschallwandler (18, 20) in einem Gehäuse (28) untergebracht sind, welches die strömungsoptimierte Kontur (32) aufweist, und wobei das Gehäuse (28) an zumindest einer Seite eine glatte, konvexe Außenkontur hat.

6. Anordnung nach einem der vorhergehenden Ansprüche,
wobei das Gehäuse (28) senkrecht in die Leitung (12) eingesetzt und jeder Ultraschallwandler (18, 20) mit seiner Abstrahlfläche um einen Winkel verkippt ist, so dass der erste und der zweite Messpfad gegenüber einer Querschnittsebene der Leitung (12) schräg verlaufen.

7. Anordnung nach einem der vorhergehenden Ansprüche,
wobei der erste Ultraschallwandler (18) und der zweite Ultraschallwandler (20) zueinander parallelverschoben angeordnet sind, so dass der erste Messpfad und der zweite Messpfad zueinander um einen Versatz (40) in Strömungsrichtung beabstandet verlaufen.

8. Messverfahren für die Bestimmung einer Strömungsgeschwindigkeit und/oder eines Durchflusses eines in einer Flaregasleitung (12) mit einer Strömungsgeschwindigkeit von zumindest 40 m/s oder sogar von zumindest 70 m/s strömenden Fluids (14), wobei eine von der Strömungsgeschwindigkeit abhängige Laufzeitdifferenz von Ultraschall zwischen zwei Ultraschallwandlern (18, 20) ausgewertet wird, nämlich von Ultraschall auf einem ersten Messpfad und auf einem in umgekehrter Richtung zu dem ersten Messpfad verlaufenden zweiten Messpfad, wobei die Ultraschallwandler (18, 20) an einer Wandung der Flaregasleitung (12) angeordnet und in jeweils einem senkrecht zu der Leitung (12) angeordneten Stutzen (30) montiert oder angeschweißt sind und mit einem Teilbereich in den von dem Fluid (14) durchströmten Innenraum hineinragen, wobei Abrisswirbel (38) an Kanten der Ultraschallwandler (18, 20) durch eine für die Art des Fluids und die zu erwartende Strömungsgeschwindigkeit anhand von aus der Luftfahrttechnik bekannten aerodynamischen Formen strömungsoptimierte Kontur (32) der Ultraschallwandler (18, 20) unterdrückt werden, bei der eine in die Strömung hineinragende Außenkontur dem Profil einer Tragfläche ähnelt.

9. Messverfahren nach Anspruch 8,
wobei die Messung auf Messpfaden erfolgt, die vollständig innerhalb eines Innenraums der Leitung (12) liegen, und zwar in der Nähe einer Wandung der Leitung beginnend und endend, und wobei die Messpfade gegenüber einer Querschnittsebene der Leitung (12) um einen Winkel verkippt sind.

10. Messverfahren nach Anspruch 8 oder 9,
wobei die Messung unter einem Parallelversatz (40) in Strömungsrichtung des ersten gegenüber dem zweiten Messpfad erfolgt.

**Claims**

1.  An arrangement comprising a flare gas pipe (12) for guiding a fluid (14) flowing therein at a high flow velocity of at least 40 m/s or even at least 70 m/s and a measurement device (10) mounted on the flare gas pipe (12) for determining a flow velocity and/or a flow rate of the fluid, wherein the measurement device comprises at least a first ultrasonic transducer (18) and a second ultrasonic transducer (20) which are arranged at a wall of the flare gas pipe (12) and are mounted or welded in a respective socket (30) arranged perpendicular to the pipe (12) and protrude with a partial region into the interior where the fluid (14) flows, and which are further arranged relative to one another so that, during operation, ultrasound transmitted and received on a first measurement path from the first ultrasonic transducer (18) to the second ultrasonic transducer (20) has a time of flight difference depending on the flow velocity with respect to ultrasound being transmitted in the reverse direction on a second measurement path by the second ultrasonic transducer (20) and received by the first ultrasonic transducer (18), wherein the first ultrasonic transducer (18) and the second ultrasonic transducer (20) have a contour (32) which is flow-optimized for the kind of the fluid and the flow velocity to be expected based on aerodynamic shapes known from aeronautical engineering, where an outer contour protruding into the flow is similar to the profile of a wing and thus suppresses the generation of eddies (38) at the ultrasonic transducers (18, 20).

2.  An arrangement according to claim 1, wherein the flare gas pipe (12) has a cylindrical or rectangular cross-section.

3.  An arrangement according to claim 1 or 2, wherein additional ultrasonic transducers are provided, which are configured to determine the flow velocity and/or the flow rate on at least one additional measurement path.

4.  An arrangement according to any of the preceding claims, wherein a pipe partial region (44) of the wall surrounding the respective ultrasonic transducer (18, 20) forms a flow-optimized contour together with the partial region (32) of the ultrasonic transducers (18, 20) protruding into the interior.

5.  An arrangement according to any of the preceding claims, wherein the ultrasonic transducers (18, 20) are disposed in a housing (28) which comprises the flow-optimized contour (32), and wherein the housing (28) has a smooth, convex outer contour on at least one side.

6.  An arrangement according to any of the preceding claims, wherein the housing (28) is inserted perpendicularly into the pipe (12) and each ultrasonic transducer (18, 20) is tilted by an angle with its radiating surface so that the first and second measurement paths are oblique with respect to a cross-sectional plane of the pipe (12).

7.  An arrangement according to any of the preceding claims, wherein the first ultrasonic transducer (18) and the second ultrasonic transducer (20) are arranged with a mutual parallel offset so that the first measurement path and the second measurement path have a mutual offset (40) in the flow direction.

8.  A measurement method for determining a flow velocity and/or a flow rate of a fluid (14) flowing in a flare gas pipe (12) at a flow velocity of at least 40 m/s or even at least 70 m/s, wherein a time of flight difference of ultrasound depending on the flow velocity between two ultrasonic transducers (18, 20) is evaluated, namely, of ultrasound on a first measurement path and on a second measurement path extending in reverse direction to the first measurement path, wherein the ultrasonic transducers (18, 20) are arranged at a wall of the flare gas pipe (12) and are each mounted or welded in a socket (30) arranged perpendicularly to the pipe and protrude with a partial region into the interior where the fluid (14) flows, wherein eddies (38) at edges of the ultrasonic transducers (18, 20) are suppressed by a contour (32) of the ultrasonic transducers (18, 20) which is flow-optimized for the kind of the fluid and the flow velocity to be expected based on aerodynamic shapes known from aeronautical engineering, where an outer contour protruding into the flow is similar to the profile of a wing.

9.  The measurement method of claim 8, wherein the measurement takes place on measurement paths which are completely in the interior of the pipe (12), beginning and ending in the vicinity of a wall of the pipe (12), and wherein the measurement paths are tilted by an angle with respect to a cross sectional plane of the pipe (12)

10. The measurement method of claim 8 or 9, wherein the measurement takes place with a parallel offset (40) of the first measurement path with respect to the second measurement path in flow direction.

**Revendications**

1.  Agencement comportant une conduite de gaz de torche (12) pour mener un fluide (14) qui s'écoule dans celle-ci à des vitesses d'écoulement élevées d'au moins 40 m/s ou même d'au moins 70 m/s, et un dispositif de mesure (10) monté sur la conduite de gaz de torche (12) et destiné à déterminer une vitesse d'écoulement et/ou un débit du fluide, le dispositif de mesure comprenant au moins un premier transducteur ultrasonore (18) et un second transducteur ultrasonore (20) qui sont agencés sur une paroi de la conduite de gaz de torche (12) et qui sont montés ou soudés dans une tubulure respective (30) agencée perpendiculairement à la conduite (12) et qui pénètrent par une zone partielle dans l'espace intérieur traversé par le fluide (14) et qui sont en outre agencés de telle sorte l'un par rapport à l'autre que pendant le fonctionnement les ultrasons envoyés du premier transducteur ultrasonore (18) au second transducteur ultrasonore (20) et reçus sur un premier trajet de mesure présentent une différence de temps de parcours dépendant de la vitesse d'écoulement, par rapport à des ultrasons envoyés en sens inverse depuis le second transducteur ultrasonore (20) et reçus par le premier transducteur ultrasonore (18) sur un second trajet de mesure, le premier transducteur ultrasonore (18) et le second transducteur ultrasonore (20) présentant un contour (32) optimisé sur le plan aérodynamique pour le type de fluide et pour la vitesse d'écoulement à attendre en se référant aux formes aérodynamiques connues des techniques aéronautiques, contour pour lequel un contour extérieur pénétrant dans l'écoulement ressemble au profil d'une voilure et inhibe ainsi la formation de turbulences d'arrachement (38) au niveau du transducteur ultrasonore (18, 20).

2. Agencement selon la revendication 1, dans lequel la conduite de gaz de torche (12) présente une section cylindrique ou rectangulaire.

3. Agencement selon la revendication 1 ou 2, dans lequel sont prévus des transducteurs ultrasonores supplémentaires conçus pour déterminer la vitesse d'écoulement et/ou le débit sur au moins un autre trajet de mesure.

4. Agencement selon l'une des revendications précédentes, dans lequel une zone partielle conductrice (44) de la paroi, laquelle entoure le transducteur ultrasonore respectif (18, 20), forme, conjointement avec la zone partielle (32) du transducteur ultrasonore (18, 20), laquelle pénètre dans l'espace intérieur, un contour optimisé sur le plan aérodynamique.

5. Agencement selon l'une des revendications précédentes, dans lequel les transducteurs ultrasonores (18, 20) sont logés dans un boîtier (28) qui présente le contour (32) optimisé sur le plan aérodynamique, le boîtier (28) présentant sur au moins une face un contour extérieur convexe lisse.

6. Agencement selon l'une des revendications précédentes, dans lequel le boîtier (28) est inséré verticalement dans la conduite (12) et chaque transducteur ultrasonore (18, 20) a sa surface de rayonnement pivotée d'un angle, de telle sorte que les premier et second trajets de mesure s'étendent en oblique par rapport à un plan de section de la conduite (12).

7. Agencement selon l'une des revendications précédentes, dans lequel le premier transducteur ultrasonore (18) et le second transducteur ultrasonore (20) sont agencés de façon décalée parallèlement l'un à l'autre, de telle sorte que le premier trajet de mesure et le second trajet de mesure s'étendent en étant écartés d'un décalage (40) en direction d'écoulement.

8. Procédé de mesure pour déterminer une vitesse d'écoulement et/ou un débit d'un fluide (14) qui s'écoule dans une conduite de gaz de torche (12) à une vitesse d'écoulement d'au moins 40 m/s ou même d'au moins 70 m/s, dans lequel on évalue une différence de temps de parcours des ultrasons, dépendante de la vitesse d'écoulement, entre deux transducteurs ultrasonores (18, 20), à savoir des ultrasons sur un premier trajet de mesure et ceux sur un second trajet de mesure s'étendant en sens inverse par rapport au premier trajet de mesure, les transducteurs ultrasonores (18, 20) étant agencés sur une paroi de la conduite de gaz de torche (12) et étant montés ou soudés dans une tubulure respective (30) agencée perpendiculairement à la conduite (12) et pénétrant par une zone partielle dans l'espace intérieur traversé par le fluide (14), et dans lequel on inhibe des turbulences d'arrachement (38) sur les arêtes des transducteurs ultrasonores (18, 20) par un contour (32) des transducteurs ultrasonores (18, 20) qui est optimisé sur le plan aérodynamique pour le type de fluide et pour la vitesse d'écoulement à attendre en se référant aux formes aérodynamiques connues des techniques aéronautiques, contour pour lequel un contour extérieur pénétrant dans l'écoulement ressemble au profil d'une voilure.

9. Procédé de mesure selon la revendication 8, dans lequel on effectue la mesure sur des trajets de mesure qui se trouvent complètement à l'intérieur de l'espace intérieur de la conduite (12) en partant et se terminant à proximité d'une paroi de la conduite, les trajets de mesure étant pivotés d'un angle par rapport à un plan de section de la conduite (12).

**10.** Procédé de mesure selon la revendication 8 ou 9, dans lequel on effectue la mesure sous un décalage parallèle (40) en direction d'écoulement du premier trajet de mesure par rapport au second.

Figur 1

Figur 2

## Figur 3

## Figur 4

Figur 5

Figur 6

Figur 7 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004060118 A1
- DE 102004060064 A1
- US 6647804 B1
- US 5251490 A
- EP 0622614 A1
- EP 0580099 A2
- WO 9636852 A
- DE 2823497

**In der Beschreibung aufgeführte Nicht-Patentliteratur**

- How much do you flare? - GE Measurement & Control. *PROCESS worldwide 3-2006,* 01. Marz 2006, 18-18
- **L. CERVINO et al.** Perturbation and adjoint analyses of flow-acoustic interactions in an unsteady 2D jet. *Proceedings of the 2002 Summer Program, Center for Turbulence Research*